# EUROPÄISCHE PATENTSCHRIFT

(11) **EP 1 525 114 B1**
(45) Veröffentlichungstag und Bekanntmachung des Hinweises auf die Patenterteilung: **11.03.2009**
(21) Anmeldenummer: 03766220.2
(22) Anmeldetag: 18.07.2003
(51) Int. Cl.: B60N 2/235, B60N 2/433

(54) **VERRIEGELUNGSVORRICHTUNG FÜR EINEN FAHRZEUGSITZ**
LOCKING DEVICE FOR A VEHICLE SEAT
DISPOSITIF DE VERROUILLAGE POUR UN SIEGE DE VEHICULE

(30) Priorität: 01.08.2002 DE 10235141
(43) Veröffentlichungstag der Anmeldung: 27.04.2005
(73) Patentinhaber: KEIPER GmbH & Co. KG, 67657 Kaiserslautern (DE)
(72) Erfinder: NOCK, Eckhard, 67551 Worms (DE); HÄNSEL, Richard, 55237 Flonheim (DE); KLEIN, Mario, 78176 Blumberg (DE); KRAUS, Martin, 67806 Katzenbach (DE)
(74) Vertreter: Patentanwälte Hosenthien-Held und Dr. Held
(86) Internationale Anmeldenummer: PCT/EP2003/007836
(87) Internationale Veröffentlichungsnummer: WO 2004/012959

(56) Entgegenhaltungen:
- EP-A- 1 260 404
- EP-A- 1 279 552
- WO-A-01/76907
- WO-A-03/010025
- US-A- 5 540 117
- US-A1- 2002 008 419

## Beschreibung

Die Erfindung betrifft eine Verriegelungsvorrichtung für einen Fahrzeugsitz, insbesondere für einen Kraftfahrzeugsitz, mit den Merkmalen des Oberbegriffs des Anspruches 1 sowie einen Beschlag, der eine solche Verriegelungsvorrichtung aufweist, und einen Fahrzeugsitz mit wenigstens einem solchen Beschlag.

Eine aus der WO 01/76907 A1 bekannte Verriegelungsvorrichtung dieser Art verriegelt einen Beschlag zur Lehnenneigungseinstellung. Das Fangstück ist im Normalfall in Öffnungsrichtung des Verriegelungselementes im Abstand zu diesem angeordnet, während es in radialer Richtung des Verriegelungselements an diesem anliegt. Beim Entriegeln nimmt das Fangstück nach einem gewissen Schwenkweg den angekoppelten Spannexzenter mit. Im Crashfall stützt das Fangstück die Sperrklinke ab, während der Spannexzenter ausweichen kann. Im Falle einer Kopplung über eine Schlitz-Zapfen-Führung könnte eine Rückwirkung des Spannexzenters auf das Fangstück erfolgen.

Der Erfindung liegt die Aufgabe zu Grunde, eine Verriegelungsvorrichtung der eingangs genannten Art zu verbessern. Diese Aufgabe wird erfindungsgemäß durch eine Verriegelungsvorrichtung mit den Merkmalen des Anspruches 1 gelöst. Vorteilhafte Ausgestaltungen sind Gegenstand der Unteransprüche.

Dadurch, dass ein dem Verriegelungselement zugeordneter Anschlag zum Zusammenwirken mit dem Spannexzenter im Crashfall vorgesehen ist, wobei im Falle des Zusammenwirkens des Spannexzenters und des Anschlags der Spannexzenter in Anlage an den Anschlag gelangt, bevor die Kopplung mit dem Fangstück wirksam wird, kann eine Ausweichbewegung des Spannexzenters im Crashfall gestoppt werden. Eine Rückwirkung auf das Fangstück, welche bei hohen Belastungsspitzen auftreten könnte, wobei das Fangstück durch eine Bewegung seine gewünschte Position verlassen könnte, kann ausgeschlossen werden. Damit kann die erfindungsgemäße Verriegelungsvorrichtung auch bei sehr hohen, impulsartigen Belastungen eingesetzt werden, beispielsweise in einem als Lehnenneigungseinsteller ausgebildeten Beschlag oder einer Schließvorrichtung zur Fahrzeugstrukturanbindung des Fahrzeugsitzes eingesetzt werden. Die Kopplung zwischen dem Fangstück und dem Spannexzenter über eine Schlitz-Zapfen-Führung oder ähnliche wegverzögernde Mittel hat den Vorteil, daß Bauraum eingespart werden kann.

Der Anschlag ist vorzugsweise an einem Steuernocken vorgesehen, mit welchem der Spannexzenter zusammenwirkt und der mit dem Verriegelungselement verbunden ist, da dann - entsprechend ihrer Funktion - verschieden dicke Bauteile in verschiedenen Ebenen bauraumsparend angeordnet werden können. Zur einfacheren Herstellung ist der Anschlag vorzugsweise am Steuernocken angeformt, so daß er - kostenneutral - gleichzeitig mit diesem aus einem Blech ausgestanzt werden kann.

Um jeglichen Impulsübertrag auf das Fangstück vor Anlage des Verriegelungselementes am Fangstück zu vermeiden, liegt das Fangstück im Normalfall an einem festen Anschlag an, der vorzugsweise an einem Bauteil, welches mit den diversen Lagern für die schwenkbaren Bauteile der Verriegelungsvorrichtung verbunden ist, angebracht ist, beispielsweise an einem Beschlagteil angebracht ist.

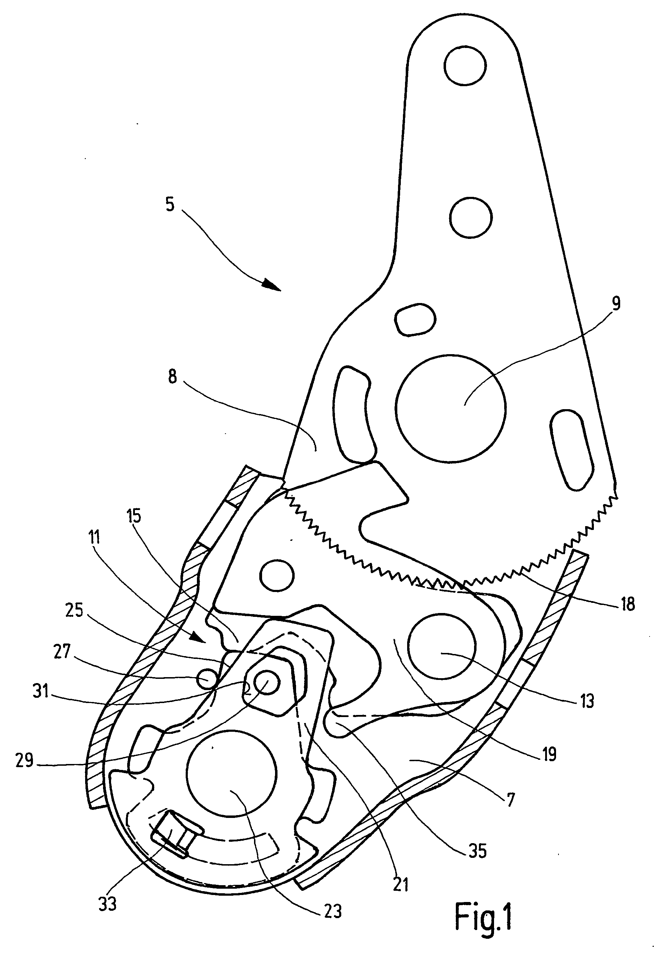

Im folgenden ist die Erfindung anhand eines in der Zeichnung dargestellten Ausführungsbeispiels näher erläutert. Es zeigen
- Fig. 1: eine Ansicht des Ausführungsbeispiels im verriegelten Zustand im Normal- fall,

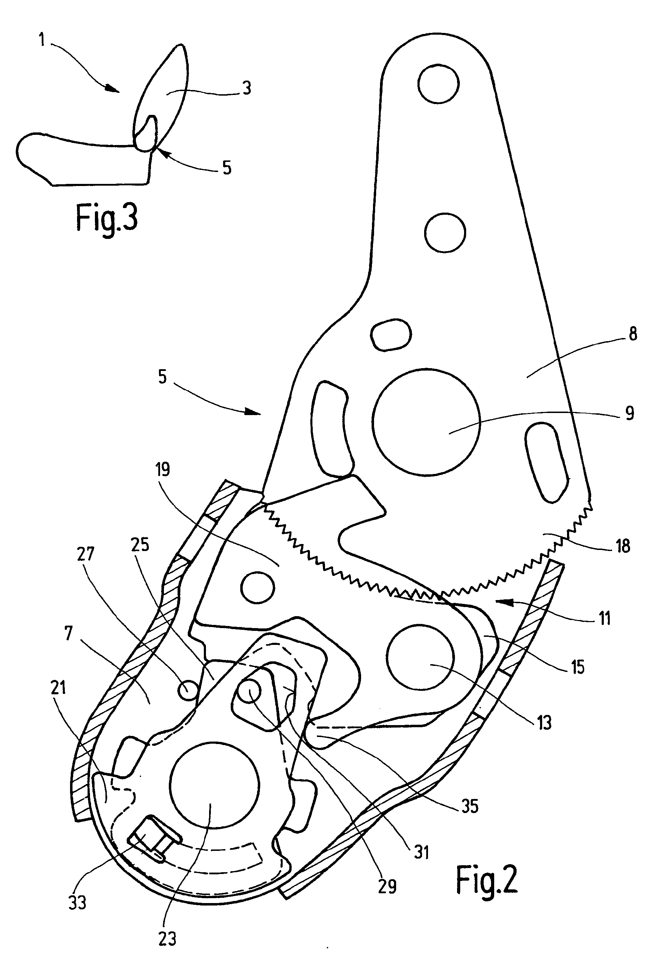

- Fig. 2: eine Ansicht entsprechend Fig. 1 nach einem hohen Impuls, und
- Fig. 3: eine schematische Darstellung eines Fahrzeugsitzes.

Ein Fahrzeugsitz 1 eines Kraftfahrzeuges ist zur Neigungseinstellung seiner Lehne 3 auf beiden Seiten mit einem Beschlag 5 versehen. Der Beschlag 5 weist ein sitzteilstrukturfestes Beschlagunterteil 7 und ein lehnenstrukturfestes Beschlagoberteil 8 auf, welches auf einem Lehnenlagerbolzen 9 relativ zum Beschlagunterteil 7 schwenkbar gelagert ist. Das Beschlagunterteil 7 besteht aus zwei plattenförmigen, parallelen Gehäuseteilen, welche zwischen sich einen Bauraum zur Aufnahme einer nachfolgend genauer beschriebenen Verriegelungsvorrichtung 11 zur Verfügung stellen.

Auf einem Klinkenlagerbolzen 13 des Beschlagunterteils 7 ist eine Sperrklinke 15 als Verriegelungselement schwenkbar gelagert. Zum Verriegeln wirkt die Sperrklinke 15 mittels einer Verzahnung mit einem Zahnkranz 18 als Gegenelement zusammen, welcher am Beschlagoberteil 8 angeformt ist. Ein ebenfalls auf dem Klinkenlagerbolzen 13 gelagerter Steuernocken 19 ist mit der Sperrklinke 15 drehfest verbunden. Der Steuernocken 19 steuert in Zusammenwirken mit Steuerelementen des Beschlagoberteils 8 das Einfallen der Sperrklinke 15 in den Zahnkranz 18.

Um den verriegelten Zustand der beschriebenen Elemente der Verriegelungsvorrichtung 11 zu sichern, sind verschiedene Sicherungselemente vorgesehen. Ein Spannexzenter 21 ist schwenkbar auf einem Exzenterlagerbolzen 23 gelagert und durch eine nicht näher dargestellte Feder in Schließrichtung belastet. Der mit einer bezüglich des Exzenterlagerbolzens 23 exzentrisch gekrümmten Spannfläche versehene Spannexzenter 21 wirkt auf den Steuernocken 19 ein, welcher die Sperrklinke 15 in den Zahnkranz 18 drückt. In der Ebene der Sperrklinke 15 ist auf dem Exzenterlagerbolzen 23 ein Fangstück 25 schwenkbar gelagert, welches federbelastet gegen einen fest mit dem Beschlagunterteil 7 verbundenen Anschlagsbolzen 27 gedrückt wird.

Im beschriebenen verriegelten Zustand der Verriegelungsvorrichtung 11 ist das Fangstück 25 im Normalfall in einem geringen Abstand zur Sperrklinke I S auf deren vom Zahnkranz 18 abgewandten Seite angeordnet. Dieser Abstand ist geringer als die Zahnhöhe der Verzahnung der Sperrklinke 15 und des Zahnkranzes 18. Im Crashfall stützt das Fangstück 25 die mit einem öffnenden Moment belastete Sperrklinke 15 ab, so daß letztere nicht öffnen kann.

Zum Entriegeln der Verriegelungsvorrichtung 11 ist das Fangstück 25 mit einem Entriegelungsbolzen 29 versehen, welcher auf der einen Seite durch eine Kulisse des Beschlagunterteils 7 nach außen ragt und auf der anderen Seite durch ein Fenster 31 des Spannexzenters greift. Außer dieser Kopplung über den Entriegelungsbolzen 29 und das Fenster 31 sind der Spannexzenter 21 und das Fangstück 25 über eine Schlitz-Zapfen-Führung 33 miteinander gekoppelt. Beim Entriegeln wird zunächst das Fangstück 25 über den Entriegelungsbolzen 29 von der Sperrklinke 15 weggeschwenkt, wobei nach Erreichen des Randes des Fensters 31 durch den Entriegelungsbolzen 29 der Spannexzenter 21 wegverzögert mitgenommen wird und dieser den Steuernocken 19 und damit die Sperrklinke 15 freigibt.

Im Crashfall kann es sein, daß über die Lehne 3, das Beschlagoberteil 8, die Sperrklinke 15 und der Steuernocken 19 ein Impuls auf den Spannexzenter 21 gegeben wird. Da der Spannexzenter 21 außerhalb der Selbsthemmung am Steuernocken 19 anliegt, wird der Spannexzenter 21 durch den Impuls in Öffnungsrichtung stark beschleunigt. Um zu vermeiden, daß der Spannexzenter 21 über seine Kopplungen den Impuls auf das Fangstück 25 überträgt, insbesondere bevor letzteres die Sperrklinke 15 abstützen kann, ist am Steuernocken 19 ein Anschlag 35 vorgesehen. Der Anschlag 35 ist fingerförmig ausgebildet und am Steuernocken 19 auf der vom Beschlagoberteil 8 abgewandten Seite im Bereich des Klinkenlagerbolzens 13 angeformt. Der Spannexzenter 21 gelangt in Anlage an den Anschlag 35, bevor der Rand des Fensters 31 den Entriegelungsbolzen 29 berührt. Das Fangstück 25 bleibt somit in Ruhe und kann die Sperrklinke 15 abstützen.

### Bezugszeichenliste

- 1: Fahrzeugsitz
- 3: Lehne
- 5: Beschlag
- 7: Beschlagunterteil
- 8: Beschlagoberteil
- 9: Lehnenlagerbolzen
- 11: Verriegelungsvorrichtung
- 13: Klinkenlagerbolzen
- 15: Sperrklinke, Verriegelungselement
- 18: Zahnkranz, Gegenelement
- 19: Steuernocken
- 21: Spannexzenter
- 23: Exzenterlagerbolzen
- 25: Fangstück
- 27: Anschlagsbolzen
- 29: Entriegelungsbolzen
- 31: Fenster
- 33: Schlitz-Zapfen-Führung
- 35: Anschlag

## Patentansprüche

1. Verriegelungsvorrichtung für einen Fahrzeugsitz, insbesondere für einen Kraftfahrzeugsitz, mit einem schwenkbar gelagerten Verriegelungselement (15), dem ein Anschlag (35) zugeordnet ist, einem mit dem Verriegelungselement (15) zusammenwirkenden Gegenelement (18), einem schwenkbar gelagerten, federbelasteten Spannexzenter (21), welcher auf das Verriegelungselement (15) einwirkt und dieses im Normalfall in Eingriff mit dem Gegenelement (18) hält, und einem mit dem Spannexzenter (21) gekoppelten Fangstück (25), welches das Verriegelungselement (15) im Crashfall abstützt, **dadurch gekennzeichnet, dass** der dem Verriegelungselement (15) zugeordnete Anschlag (35) zum Zusammenwirken mit dem Spannexzenter (21) im Crashfall vorgesehen ist, indem der Spannexzenter (21), wenn er im Crashfall durch einen Impuls in Öffnungsrichtung stark beschleunigt wird, in Anlage an den Anschlag (35) gelangt, bevor die Kopplung mit dem Fangstück (25) wirksam wird.

2. Verriegelungsvorrichtung nach Anspruch 1, **dadurch gekennzeichnet, dass** der Spannexzenter (21) und das Fangstück (25) wegverzögert auf Mitnahme gekoppelt sind.

3. Verriegelungsvorrichtung nach Anspruch 1 oder 2, **dadurch gekennzeichnet, dass** der Spannexzenter (21) über einen drehfest mit dem Verriegelungselement (15) verbundenen Steuernocken (19) auf das Verriegelungselement (15) einwirkt.

4. Verriegelungsvorrichtung nach Anspruch 3, **dadurch gekennzeichnet, dass** der Anschlag (35) am Steuernocken (19) ausgebildet ist.

5. Verriegelungsvorrichtung nach Anspruch 4, **dadurch gekennzeichnet, dass** der Anschlag (35) fingerförmig am Steuernocken (19) angeformt ist.

6. Vemegelungsvorrichtung nach einem der Ansprüche 1 bis 5, **dadurch gekennzeichnet, dass** das Verriegelungselement (15), der Spannexzenter (21) und das Fangstück (25) auf einem gemeinsamen Bauteil (7) gelagert sind.

7. Verriegelungsvorrichtung nach Anspruch 6, **dadurch gekennzeichnet, dass** das gemeinsame Bauteil (7) einen festen Anschlag (27) aufweist, an welchem das Fangstück (25) im Normalfall anliegt.

8. Beschlag, insbesondere Einsteller (5) zur Neigungseinstellung eines Bauteils (3) eines Fahrzeugsitzes (1) oder zur Anbindung des Fahrzeugsitzes (1) an eine Fahrzeugstruktur, **gekennzeichnet durch** eine Verriegelungsvorrichtung nach einem der Ansprüche 1 bis 7.

9. Fahrzeugsitz (1) mit wenigstens einem Beschlag (5) nach Anspruch 8.

## Claims

1. Locking device for a vehicle seat, in particular for a motor vehicle seat, with a pivotably mounted locking element (15), with which a stop (35) is associated, a mating element (18) which interacts with the locking element (15), a pivotably mounted, spring-loaded clamping eccentric (21) which acts on the locking element (15) and normally holds this in engagement with the mating element (18), and an intercepting piece (25) which is coupled to the clamping eccentric (21) and supports the locking element (15) in the event of a crash, **characterised in that** the stop (35) associated with the locking element (15) is provided for interaction with the clamping eccentric (21) in the event of a crash **in that**, when it is significantly accelerated by an impulse in the opening direction in the event of a crash, the clamping eccentric (21) comes to bear against the stop (35) before the coupling with the intercepting piece (25) becomes effective.

2. Locking device according to Claim 1, **characterised in that** the clamping eccentric (21) and the intercepting piece (25) are coupled for entrainment with a travel delay.

3. Locking device according to Claim 1 or 2, **characterised in that** the clamping eccentric (21) acts on the locking element (15) via a control cam (19) which is connected in a rotationally rigid manner to the locking element (15).

4. Locking device according to Claim 3, **characterised in that** the stop (35) is formed on the control cam (19).

5. Locking device according to Claim 4, **characterised in that** the stop (35) is integrally formed on the control cam (19) in the form of a finger.

6. Locking device according to any one of Claims 1 to 5, **characterised in that** the locking element (15), the clamping eccentric (21) and the intercepting piece (25) are mounted on a common component (7).

7. Locking device according to Claim 6, **characterised in that** the common component (7) has a fixed stop (27) against which the intercepting piece (25) normally bears.

8. Fitting, in particular adjuster (5) for adjusting the inclination of a component (3) of a vehicle seat (1) or for connecting the vehicle seat (1) to a vehicle structure, **characterised by** a locking device according to any one of Claims 1 to 7.

9. Vehicle seat (1) with at least one fitting (5) according to Claim 8.

## Revendications

1. Dispositif de verrouillage pour un siège de véhicule, en particulier pour un siège de véhicule automobile, comportant un élément de verrouillage (15) monté pivotant, auquel est associée une butée (35), un contre-élément (18) coopérant avec l'élément de verrouillage (15), un excentrique de serrage (21) chargé par ressort, monté pivotant, lequel agit sur l'élément de verrouillage (15) et maintient celui-ci dans le cas normal en prise avec le contre-élément (18), et une pièce d'arrêt (25) couplée avec l'excentrique de serrage (21), laquelle soutient l'élément de verrouillage (15) en cas d'accident, **caractérisé par le fait que** la butée (35) associée à l'élément de verrouillage (15) est prévue pour la coopération avec l'excentrique de serrage (21) en cas d'accident **par le fait que** l'excentrique de serrage (21), lorsqu'il est accéléré fortement en cas d'accident par une impulsion dans la direction de l'ouverture, prend appui contre la butée (35), avant que le couplage avec la pièce d'arrêt (25) ne soit actif.

2. Dispositif de verrouillage selon la revendication 1, **caractérisé par le fait que** l'excentrique de serrage (21) et la pièce d'arrêt (25) sont couplés avec un retard de parcours à l'entraînement.

3. Dispositif de verrouillage selon l'une des revendications 1 ou 2, **caractérisé par le fait que** l'excentrique de serrage (21) agit sur l'élément de verrouillage (15) par l'intermédiaire d'une came de commande (19) liée de façon solidaire en rotation avec l'élément de verrouillage (15).

4. Dispositif de verrouillage selon la revendication 3, **caractérisé par le fait que** la butée (35) est réalisée sur la came de commande (19).

5. Dispositif de verrouillage selon à revendication 4, **caractérisé par le fait que** la butée (35) est formée sur la came de commande (19) sous forme de doigt.

6. Dispositif de verrouillage selon l'une des revendications 1 à 5, **caractérisé par le fait que** l'élément de verrouillage (15), l'excentrique de serrage (21) et la pièce d'arrêt (25) sont montés sur un composant commun (7).

7. Dispositif de verrouillage selon la revendication 6, **caractérisé par le fait que** le composant commun (7) présente une butée solide (27) sur laquelle la pièce d'arrêt (25) s'applique dans le cas normal.

8. Armature, en particulier dispositif de réglage (5) pour le réglage d'inclinaison d'un composant (3) d'un siège de véhicule (1) ou pour la liaison du siège de véhicule (1) à une structure de véhicule, **caractérisée par** un dispositif de verrouillage tel que défini à l'une des revendications 1 à 7.

9. Siège de véhicule (1) présentant au moins une armature (5) telle que définie à la revendication 8.
